# EUROPÄISCHE PATENTSCHRIFT

(11) **EP 3 165 327 B1**
(45) Veröffentlichungstag und Bekanntmachung des Hinweises auf die Patenterteilung: **25.09.2019**
(21) Anmeldenummer: 16197282.3
(22) Anmeldetag: 04.11.2016
(51) Int. Cl.: B23Q 11/00, B27G 3/00, B23Q 17/00, G01P 13/00, G01F 1/00

(54) **BEARBEITUNGSMASCHINE MIT MESSEINRICHTUNG SOWIE VERFAHREN**
PROCESSING MACHINE WITH MEASURING DEVICE AND METHOD
MACHINE D'USINAGE COMPRENANT UN DISPOSITIF DE MESURE ET PROCÉDÉ

(30) Priorität: 05.11.2015 DE 102015221730
(43) Veröffentlichungstag der Anmeldung: 10.05.2017
(73) Patentinhaber: HOMAG GmbH, 72296 Schopfloch (DE)
(72) Erfinder: Frick, David, 72149 Neustetten (DE)
(74) Vertreter: Hoffmann Eitle

(56) Entgegenhaltungen:
- WO-A1-2014/110340
- DE-A1-102011 055 113
- DE-U1-202006 008 693
- GB-A- 2 273 161

## Beschreibung

### Technisches Gebiet

Die Erfindung betrifft eine Bearbeitungsmaschine mit einer Messeinrichtung zur Bewertung einer gasförmigen Fluidströmung. Durch die Strömung werden bspw. bei der Bearbeitung mit einem Bearbeitungswerkzeug oder -aggregat anfallende Späne oder Ähnliches abgeführt. Die im Rahmen der vorliegenden Anmeldung zu bearbeitenden Werkstücke sind Bauteile wie rein beispielhaft Massivholz- oder Spanplatten, MDF-Platten, Verbundmaterialwerkstücke, oder Ähnliches, die in der Möbel- und Bauelementeindustrie zum Einsatz kommen.

### Stand der Technik

Bei Bearbeitungsmaschinen für Bauteile aus dem Bereich der Möbel- und Bauelementeindustrie werden immer neue und höhere Anforderungen an die Sicherheit gestellt, unter anderem in Bezug auf die Absaugung der während der Bearbeitung entstehenden Restmaterialien wie Späne und (Holz-)staub. Dabei wird gefordert, dass eine qualitative Messung der Absaugleistung durchzuführen ist, sodass sichergestellt wird, dass eine bestimmte, minimal erforderliche Absaugleistung an den Bearbeitungsstationen der Bearbeitungsmaschine anliegt.

Die bekannten Ausführungsformen von Messeinrichtungen zur Überwachung der Absaugleistung beziehungsweise der Rohrinnenströmung, insbesondere einer partikelbeladenen Strömung, bei oben genannten Bearbeitungsmaschinen beruhen beispielsweise auf Druckmessungen, Ultraschallmessungen oder optischen beziehungsweise chemischen Messungen. Die Gemeinsamkeit der bekannten Messeinrichtungen ist die Notwendigkeit eines radialen Durchbruchs an dem strömungsführenden Rohrabschnitt, sodass ein Sensor mittelbar oder unmittelbar in Verbindung mit der partikelbeladenen Strömung gebracht wird. Das bedeutet, dass bei den bekannten Messeinrichtungen Einbauteile zum Überwachen der Rohrinnenströmung innerhalb des strömungsführenden Rohres benötigt werden.

Hierdurch kommt es unweigerlich zu lokalen Strömungsirritationen und/oder auch zu Ablagerungen der in der Strömung befindlichen Partikeln an einer solchen Messeinrichtung. Die abgelagerten Partikeln führen zu erheblichen Beeinträchtigungen der Überwachungsfunktion der Messeinrichtungen bis hin zu deren Verlust. Die Zugänge und Funktionsflächen der Sensoren werden durch die abgelagerten Partikeln zugesetzt, sodass kein verwertbares und/oder verlässliches Signal von einem Sensor der Messeinrichtung ausgegeben werden kann. Dies führt zu erhöhten Maschinenstillstandzeiten durch Notabschaltungen aufgrund von fehlerhaft erkannter unzureichender Absaugleistung und damit zu einer Verringerung der Produktivität.

Des Weiteren ist der vorher genannte radiale Durchbruch, um den jeweiligen Sensor in Verbindung mit der Strömung zu bringen, ein belastungssteigerndes Element am Rohr selbst, von dem aus häufig eine Rissbildung ausgeht. Daher wird die Haltbarkeit der Rohre durch die Nutzung der bekannten Messeinrichtungen zum Überwachen der Rohrinnenströmung signifikant reduziert.

Ferner beschreibt die DE 10 2011 055 113 A1 eine energiesparende Volumenstromregelung für ein Entstaubungssystem zur Absaugung eines Arbeitsbereichs, mit einem elektromotorisch angetriebenem Ventilator zur Erzeugung eines Volumenstroms in einem Absaugkanal, wobei eine Steuer- bzw. regelbare Ventileinrichtung vorgesehen ist, die den freien Querschnitt des Absaugkanals zur Volumenstromsteuerung bestimmt. Es ist ferner beschrieben, dass eine Sensorik vorgesehen ist, die die Partikelbelastung des Absaugkanals oder nahe oder direkt des Arbeitsbereichs erfasst und anhand deren Messdaten die Ventileinrichtung gesteuert wird. Bei der Sensorik handelt es sich um eine optische Partikelerfassung, insbesondere um einen Lichtstrahl.

Der vorgestellte Stand der Technik kann die gesteigerten sicherheitstechnischen Anforderungen nur bedingt erfüllen und führt ggf. zu einer reduzierten Produktivität der Anlage sowie erhöhten Betriebskosten. Deshalb kann der Stand der Technik die stetig steigenden Leistungsanforderungen bezüglich der Ausbringungen und Wirtschaftlichkeit der Gesamtanlage nicht mehr wie gefordert umsetzen und ist aus diesem Grund nicht zukunftsträchtig.

### Gegenstand der Erfindung

Es ist Aufgabe der vorliegenden Erfindung, eine Bearbeitungsmaschine bereitzustellen, mit der die zuvor genannten Probleme zumindest teilweise behoben werden. Bevorzugt sollen eine hohe Zuverlässigkeit hinsichtlich zumindest der qualitativen Ermittlung eines Volumenstroms gewährleistet und eine hohe Produktivität der Bearbeitungsmaschine bei einer konstruktiv einfachen Gestaltung gewährleistet sein.

Diese Aufgabe wird erfindungsgemäß durch eine Bearbeitungsmaschine mit den Merkmalen von Anspruch 1 gelöst. Weitere bevorzugte Ausgestaltungen finden sich in den Unteransprüchen.

Erfindungsgemäß umfasst eine Bearbeitungsmaschine einen durchströmten Rohrabschnitt, der eine gasförmige Fluidströmung führt. Der Rohrabschnitt steht dabei mit einem Bearbeitungsbereich der Bearbeitungsmaschine in Verbindung. Beispielsweise ist der Rohrabschnitt mit einer Absaugeinrichtung der Bearbeitungsmaschine und einer zentralen Absaugung in der Maschinenhalle verbunden.

Die Fluidströmung wird bspw. zur Absaugung der während der Bearbeitung entstehenden Restmaterialien wie Späne und Holzstaub genutzt. Eine solche Fluidströmung ist im Allgemeinen eine gasförmige, insbesondere eine partikelbeladene-gasförmige, Fluidströmung, die beispielsweise von der Bearbeitungsmaschine zu einer Absaugeinrichtung strömt. Bevorzugter Weise umfasst die Bearbeitungsmaschine ein spanendes Bearbeitungswerkzeug bzw. -aggregat, wie einen Fräser bzw. ein Fräsaggregat.

Bei der (partikelbeladenen) gasförmigen Fluidströmung kann es sich in einem konkreten Beispiel um (Absaug-)Luft handeln, mit der Bearbeitungsreste wie Späne oder Staub gefördert werden.

Ein Zusammenhang zwischen dem Signal des Sensors und einem Volumenstrom der gasförmigen Fluidströmung innerhalb des Rohrabschnitts kann qualitativ mittels einem oder mehreren Schwellwerten hergestellt werden. Alternativ ist es auch möglich, einen numerischen Zusammenhang herzustellen, der es ermöglicht, eine genauere Bewertung der Strömung vorzunehmen. Gemäß einer alternativen Variante kann der Rohrabschnitt auch dazu genutzt werden, eine Fluidströmung in einen Bearbeitungsbereich zu führen. Beispielsweise kann die Fluidströmung genutzt werden, um ein Werkstück mit Luft abzublasen und somit zu reinigen, oder die Fluidströmung wird zu einer Heißluft- bzw. Begasungsquelle geführt. Eine solche Heißluft- bzw. Begasungsquelle wird beispielsweise verwendet, um eine Haftschicht an einem Kantenband zu aktivieren, so dass das Kantenband nachfolgend an einer Schmalseite eines Werkstücks aufgebracht werden kann.

Außerhalb des durchströmten Rohrabschnitts ist ein Sensor angeordnet, der zur Erfassung von Schwingungen im Bereich des Rohrabschnitts dient, die durch die vorliegende Fluidströmung angeregt werden. Bei den Schwingungen handelt es sich beispielsweise um Transversal- oder auch Longitudinalschwingungen des Rohrabschnitts. Durch die Positionierung des Sensors außerhalb des Rohrabschnitts steht der Sensor nicht mit der Fluidströmung in Verbindung und deshalb ist auch kein radialer Durchbruch am Rohr erforderlich. Somit wird die Rissbildung am Rohrabschnitt, die beispielsweise durch die erhöhten Belastungen an einer Öffnung im Rohrabschnitt auftritt, vermieden und Stillstandzeit der Bearbeitungsmaschine wird reduziert.

Es ist ferner eine Steuereinheit vorgesehen, die eingerichtet ist, eine Schwingungsanalyse eines Signals des Sensors durchzuführen, wobei besagtes Sensorsignal die erfassten Schwingungen im Bereich des Rohrabschnitts elektronisch wiedergibt.

Das Ergebnis einer Schwingungsanalyse sind beispielsweise die vorherrschenden Schwingungsfrequenzen und die dazugehörigen Beschleunigungen beziehungsweise Amplituden. Die Steuereinheit ist vorgesehen, basierend auf dem Ergebnis der Schwingungsanalyse einen Zusammenhang zwischen dem Sensorsignal und einem Volumenstrom der gasförmigen Fluidströmung innerhalb des Rohrabschnitts herzustellen.

Der Zusammenhang bzw. die Korrelation wird beispielsweise durch Vergleichen von der erfassten Schwingungsamplitude einer bestimmten Schwingungsfrequenz, insbesondere einer Eigenfrequenz des Rohrabschnitts, mit einem vorgegebenen Mindestwert durchgeführt. Liegt die erfasste Schwingungsamplitude oberhalb des vorab festgelegten Mindestwerts (Schwellwert), kann hieraus gefolgert werden, dass eine Mindestströmung im Rohrabschnitt vorliegt. In einer bevorzugten Ausführungsform ist hierbei eine Harmonische, bevorzugt die vierte Harmonische, von Interesse.

Ferner ist es möglich, dass ein Maximalwert (oberen Schwellwert) hinterlegt ist. Wird dieser überschritten, so kann beurteilt werden, dass eine nicht normgerechte Strömung vorliegt.

Neben den bereits genannten Werten (Minimalwert und/oder Maximalwert) sind ferner weitere Zwischenwerte möglich.

Beispielsweise können zwei unterschiedliche Minimal- bzw. Schwellwerte festgelegt sein, wobei bei Unterschreiten eines dieser Werte eine unterschiedliche Reaktion ausgeführt wird. Beispielsweise kann ein Unterschreiten eines höheren Schwellwerts dazu führen, dass mittels der Steuereinrichtung eine Warnung ausgegeben wird, und bei Unterschreiten eines weiteren, niedrigeren Schwellwerts wird ein Maschinenstopp bewirkt.

Auch können in gemäß einer bevorzugten Ausführungsform in der Steuerung Werte hinterlegt sein, die zur Herstellung eines numerischen Zusammenhangs zwischen dem Signal des Sensors und dem vorherrschenden Volumenstrom innerhalb des Rohrabschnitts verwendet werden. Dabei können beispielsweise Werte verwendet werden, die auf im Vorfeld durchgeführte Referenzmessungen, bei denen ein numerischer Zusammenhang zwischen einem eingestellten Volumenstrom beziehungsweise Strömungsgeschwindigkeiten (bis zu 35 m/s) und den daraus resultierenden Schwingungen im Bereich des Rohrabschnitts basieren.

Der durchströmte Rohrabschnitt der Bearbeitungsmaschine kann gemäß einer bevorzugten Ausführungsform der vorliegenden Erfindung als ein flexibles Rohr oder ein Schlauch, insbesondere ein Absaugschlauch, ausgeführt sein. Dabei kann das strömungsführende Element eine geriffelte beziehungsweise gewellte Innenoberfläche aufweisen. Konkret kann es sich um einen sogenannten Spiralschlauch handeln, der als Absaugschlauch eingesetzt wird. Durch das Zusammenwirken der gasförmigen Fluidströmung innerhalb des Rohrabschnitts, dessen Steifigkeit und Masse sowie dessen Innenoberfläche wird der Rohrabschnitt zu Schwingungen angeregt.

Der Sensor ist bevorzugt ein Beschleunigungssensor, der in der Lage ist, die Schwingung und Vibrationen im Bereich des Rohrabschnitts zu erfassen. Durch die Verwendung eines konventionellen Beschleunigungssensors, der beispielsweise auf dem Piezoeffekt beruht, kann die Überwachung der Fluidströmung im Vergleich zur Benutzung von Drucksensoren oder Ähnlichem kostengünstiger realisiert werden. Zusätzlich ist die Überwachung der Strömung anhand der angeregten Schwingungen eines strömungsführenden Rohres robuster als die bekannten Methoden, da der Sensor hierbei nicht in Verbindung mit der Fluidströmung steht und daher nicht durch Ablagerung von Partikeln beeinflusst wird. Des Weiteren ist die Überwachung durch einen außerhalb des Rohrabschnitts angebrachten Beschleunigungssensor weniger anfällig für Störimpulse, wie beispielsweise Druckschwankungen, verursacht durch eine unregelmäßige Absaugung, die zu potentiell fehlerhaften Sensorsignalen führen und damit die Maschinenstillstandzeit erhöhen.

Auch wenn im Rahmen der vorliegenden Erfindung bevorzugt ein Beschleunigungssensor zum Einsatz kommt, können in alternativen Ausgestaltungen auch andere Sensoren verwendet werden, um Schwingungen zu erfassen.

Bei einer bevorzugten Ausführungsform der Bearbeitungsmaschine ist der Sensor außerhalb und direkt am Rohrabschnitt angebracht. Somit ist der Sensor den gleichen Schwingungen und Vibrationen wie der Rohrabschnitt ausgesetzt. Bei dieser direkten Art der Anbringung des Sensors werden keine oder nur sehr wenige Zusatzteile benötigt. Daher sind die Komplexität der Ausführung und somit auch der Kostenaufwand zur Überwachung der Fluidströmung sehr gering.

Ferner ist es bevorzugt, den Sensor an einem Messelement, insbesondere einem Messschlauch, anzubringen, welches an dem Rohrabschnitt eingefügt oder angefügt ist und das ebenfalls die gasförmige Fluidströmung führt. Der Sensor erfährt hierbei die Schwingungen des Messelements (Messschlauches), sodass diese Ausführungsform nicht zwingend auf eine Absaugstrecke bestehend aus flexiblen Rohren oder Schläuchen mit geriffelter Innenoberfläche angewiesen ist. Es ist ausreichend, dass das Messelement (der Messschlauch) die gewünschten Merkmale aufweist, sodass dieser Abschnitt der Absaugstrecke zu Schwingungen durch die Fluidströmung angeregt wird.

In einer weiteren bevorzugten Ausführungsform wird der Sensor an einen Anschlussstutzen der Bearbeitungsmaschine, an den der Rohrabschnitt angeflanscht ist, angebracht. Die Schwingungen des Rohrabschnitts übertragen sich auf den Anschlussstutzen, sodass diese auch am Stutzen durch den Sensor indirekt erfasst werden. Durch die Anbringung des Sensors an der Maschine müssen keine zusätzlichen Arbeitsschritte bei Wartungsarbeiten oder bei einem Austausch des Rohrabschnitts durchgeführt werden, daher werden die Robustheit des Systems und die Instandsetzung der Bearbeitungsmaschine optimiert.

Grundsätzlich ist allen drei vorher beschriebenen Anbringungsmöglichkeiten gemein, dass durch eine bearbeitungsmaschinennahe Anbringung des Sensors die Zuverlässigkeit der Überwachung gesteigert wird, da im Gegensatz zu absaugseitigen Messeinrichtungen ein Verstopfen der Absaugstrecke oder eine Undichtigkeit des Rohrabschnitts, die zu einer unzureichenden Absaugleistung an der Bearbeitungsmaschine führt, zuverlässig erkannt wird. Zusätzlich bieten die genannten Ausführungsformen den Vorteil, dass ein nachträgliches Ausrüsten von Bearbeitungsmaschinen mit der neuartigen Überwachungstechnik gemäß der vorliegenden Erfindung möglich ist.

Nach einer weiteren Ausführungsform ist der Rohrabschnitt an einem Anschlussstutzen einer Absaugeinrichtung und einem weiteren Anschlussstutzen der Bearbeitungsmaschine angebracht. Die Überwachung der Fluidströmung gemäß dem genannten Aufbau ist insbesondere sehr zuverlässig, wenn der Rohrabschnitt freihängend zwischen den Anschlussstutzen vorgesehen ist. Die Verwertbarkeit der Sensorsignale wird hierdurch verbessert.

Eine freihängende Anordnung des Rohrabschnitts kann bedeuten, den Rohrabschnitt von der Bearbeitungsmaschine zur Hallendecke zu führen, wo der Rohrabschnitt an einem Anschlussstutzen angeschlossen ist.

Alternativ ist es möglich, den Rohrabschnitt abschnittsweise am Hallenboden oder an einer Wand zu fixieren.

Gemäß einem weiteren Aspekt wird ein Verfahren zum Überwachen einer gasförmigen Fluidströmung einer Bearbeitungsmaschine, insbesondere derjenigen nach einem der vorangegangenen Aspekte, bereitgestellt, wobei das Verfahren die Schritte aufweist:
- Erfassen von Amplituden einer harmonischen Eigenfrequenz im Bereich eines durchströmten Rohrabschnitts der Bearbeitungsmaschine, in dem eine gasförmige Fluidströmung geführt wird, durch einen außerhalb des durchströmten Rohrabschnitts angeordneten Sensor. Bei dem Sensor kann es sich wie bereits angesprochen um einen Beschleunigungssensor handeln, der die Schwingungen beispielsweise direkt an dem Rohrabschnitt, an einem eingefügten oder angefügten Messschlauch oder einem Anschlussstutzen einer Bearbeitungsmaschine und/oder einer Absaugeinrichtung erfasst.
- Durchführen einer Schwingungsanalyse eines Signals des Sensors. Das Ergebnis der Schwingungsanalyse sind beispielsweise die vorherrschenden Schwingungsfrequenzen und die dazugehörigen Beschleunigungen beziehungsweise Amplituden.
- Herstellen eines Zusammenhangs zwischen dem Signal des Sensors und einem Volumenstrom der gasförmigen Fluidströmung innerhalb des Rohrabschnitts basierend auf dem Ergebnis der Schwingungsanalyse. Die Korrelation wird durch Vergleichen von beispielsweise der erfassten Schwingungsamplitude einer bestimmten Schwingungsfrequenz mit einem vorgegebenen Wert durchgeführt, der einem minimal benötigten Volumenstrom entspricht. Basierend hierauf wird der momentane Volumenstrom beziehungsweise die anliegende Absaugleistung qualitativ oder auch quantitativ ermittelt.

Das genannte Verfahren kann bevorzugt bei einer zuvor beschriebenen Bearbeitungsmaschine zum Einsatz kommen.

Bevorzugt wird bei dem Verfahren ferner ein Signal, insbesondere ein Nothalt-Signal oder ein Warnsignal, ausgegeben, sobald der ermittelte Volumenstrom der gasförmigen Fluidströmung unterhalb eines vorgegebenen Mindestwerts fällt. Das Nothalt-Signal kann zum Stoppen der Bearbeitungsmaschine verwendet werden, sodass beispielsweise eine unzulässig hohe Konzentration von Holzstaub an der Bearbeitungsmaschine vermieden wird.

Ferner ist es möglich, einen Maximalwert (oberen Schwellwert) festzulegen. Wird dieser überschritten, so kann beurteilt werden, dass eine nicht normgerechte Strömung vorliegt. Die Feststellung, dass ein Maximalwert überschritten wurde, kann ebenso genutzt werden, um ein Signal, insbesondere ein Nothalt-Signal oder ein Warnsignal, ausgegeben.

Neben den bereits genannten Werten (Minimalwert und/oder Maximalwert) sind ferner weitere Zwischenwerte möglich.

Beispielsweise können zwei unterschiedliche Minimal- bzw. Schwellwerte definiert werden, wobei bei Unterschreiten eines dieser Werte eine unterschiedliche Reaktion ausgeführt wird. Beispielsweise kann ein Unterschreiten eines höheren Schwellwerts dazu führen, dass mittels der Steuereinrichtung eine Warnung ausgegeben wird, und bei Unterschreiten eines weiteren, niedrigeren Schwellwerts wird ein Maschinenstopp bewirkt.

Ferner ist es möglich, das Über- oder Unterschreiten in einem Speicher zu dokumentieren.

Bevorzugter Weise basieren die in der Steuerung hinterlegten Werte, die zur Herstellung des Zusammenhangs zwischen dem Signal des Sensors und dem vorherrschenden Volumenstrom innerhalb des Rohrabschnitts verwendet werden, auf im Vorfeld durchgeführte Referenzmessungen, bei denen ein numerischer Zusammenhang zwischen einem eingestellten Volumenstrom beziehungsweise Strömungsgeschwindigkeiten (bis zu 35 m/s) und den daraus resultierenden Schwingungen im Bereich des Rohrabschnitts bestimmt wird.

Bevorzugt werden beim zuvor beschriebenen Verfahren Amplituden einer harmonischen Eigenfrequenz, bevorzugt der vierten harmonischen Eigenfrequenz, des Rohrabschnitts erfasst. Im Rahmen von Versuchen hat sich herausgestellt, dass auf diese Weise eine genaue Aussage bzgl. der Fluidströmung getroffen werden kann.

Die zuvor beschriebenen Verfahrensschritte können in einer Steuereinrichtung der zuvor beschriebenen Bearbeitungsmaschine hinterlegt sein. Die Steuereinrichtung kann somit zur Durchführung dieser Schritte eingerichtet sein.

### Kurze Beschreibung der Zeichnungen

Nachfolgend werden anhand der beigefügten Figuren eine Bearbeitungsmaschine in drei beispielhaften Ausführungsformen näher erläutert.
- Fig. 1: Perspektivische Ansicht einer Bearbeitungsmaschine gemäß einer ersten Ausführungsform der vorliegenden Erfindung.
- Fig. 2: Perspektivische Ansicht einer Bearbeitungsmaschine gemäß einer zweiten Ausführungsform der vorliegenden Erfindung.
- Fig. 3: Perspektivische Ansicht einer Bearbeitungsmaschine gemäß einer dritten Ausführungsform der vorliegenden Erfindung.

### Detaillierte Beschreibung einer bevorzugten Ausführungsform

Nachfolgend wird anhand schematischer Zeichnungen eine Bearbeitungsmaschine gezeigt. Bei einer solchen Bearbeitungsmaschine kann es sich beispielsweise um eine Maschine handeln, wie diese in der EP 2 193 877 A1 gezeigt wird. Generelle Beispiele solcher Bearbeitungsmaschinen sind CNC-Bearbeitungszentren, Durchlaufmaschinen (beispielsweise zur Kantenbearbeitung von plattenförmigen Werkstücken), Schleifmaschinen oder ähnliches.

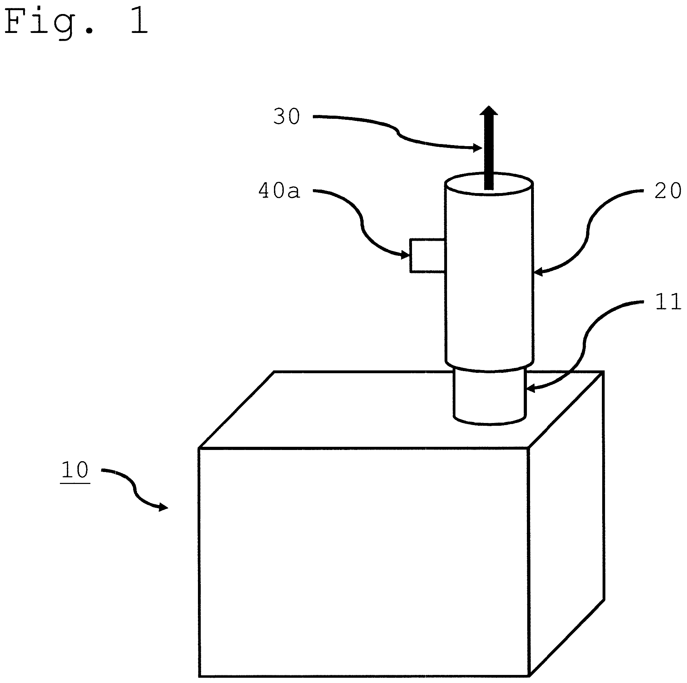

**Figur 1** zeigt schematisch eine Bearbeitungsmaschine 10 gemäß einer ersten Ausführungsform, die einen Anschlussstutzen 11 aufweist, an dem ein Rohrabschnitt 20 angeflanscht ist, wobei der Rohrabschnitt 20 als Absaugschlauch ausgebildet ist. Beispielsweise kann es sich um einen Absaugschlauch handeln, wie dieser in der EP 2 193 877 A1 gezeigt wird. Die gasförmige Fluidströmung 30 wird von der Bearbeitungsmaschine durch den Stutzen 11 und den Rohrabschnitt 20 geleitet und transportiert dabei Restmaterialien ab, die bei der Bearbeitung von Werkstücken entstehen. Im Holzbearbeitungsbereich, welches ein bevorzugtes Einsatzgebiet ist, handelt es sich bspw. um Späne oder Schleifstaub. An einem Außenumfang des Rohrabschnitts 20 ist ein Sensor 40a angebracht, der zum Erfassen der strömungsinduzierten Schwingungen im Bereich des Rohrabschnitts 20 dient.

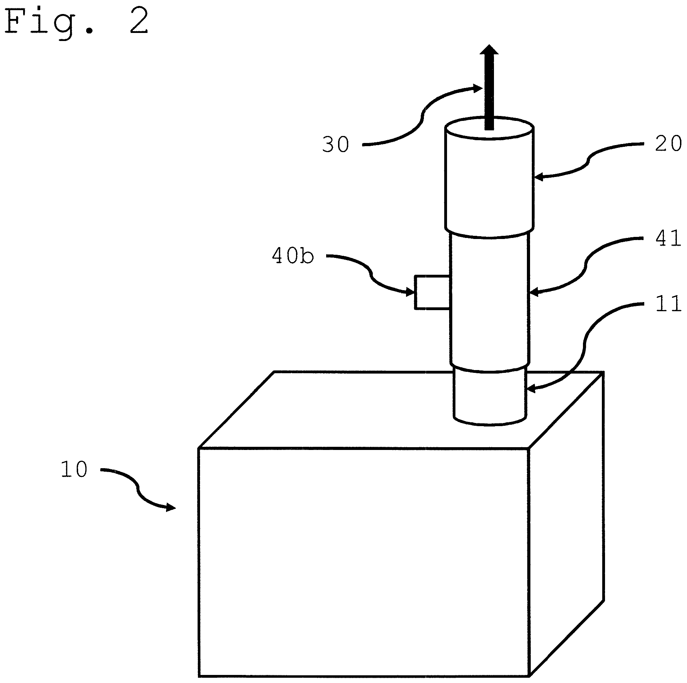

**Figur 2** stellt eine schematische Ansicht einer ähnlichen Bearbeitungsmaschine 10 gemäß einer zweiten Ausführungsform dar. Diese Ausführungsform unterscheidet sich von der ersten Ausführungsform insofern, dass ein Messschlauch 41 vorgesehen ist, der in die Absaugstrecke zwischen dem Anschlussstutzen 11 der Bearbeitungsmaschine 10 und dem weiterführenden Rohrabschnitt 20 eingefügt ist. Der Messschlauch kann jedoch auch zwischen zwei Rohrabschnitte eingefügt sein. Der Sensor 41b ist auf dem Messschlauch 41 zur Erfassung der durch die Strömung angeregten Schwingungen angebracht. Gemäß dieser Ausführungsform ist der eingefügte, beziehungsweise angefügte, Messschlauch 41 Teil der Absaugstrecke.

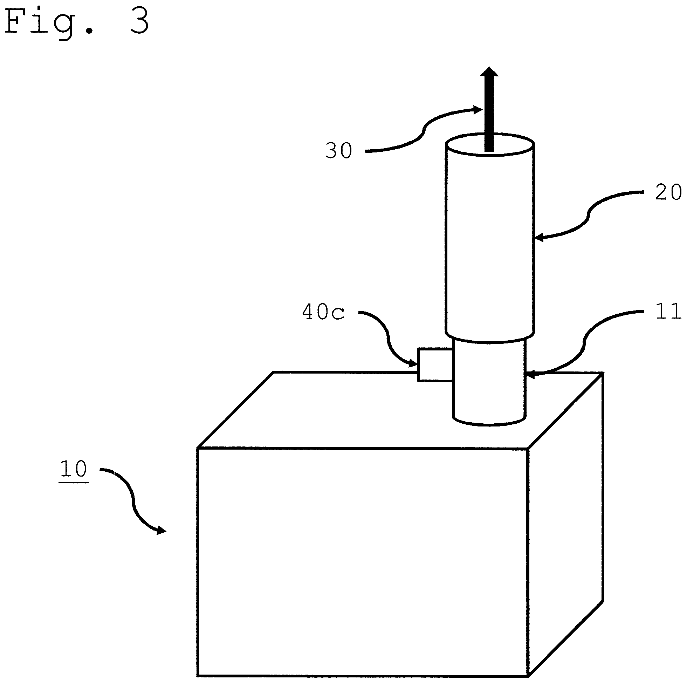

**Figur 3** ist eine schematische Ansicht einer ähnlichen Bearbeitungsmaschine 10 gemäß einer dritten Ausführungsform. Bei dieser Variante ist ein Sensor 40c direkt auf dem Anschlussstutzen 11 der Bearbeitungsmaschine 10 angebracht. Die Schwingungen des Rohrabschnitts 20, die durch die gasförmige Fluidströmung 30 angeregt werden, werden auf den Anschlussstutzen 11 übertragen, um dort von dem Sensor 40c erfasst zu werden.

Die Steuerung der Bearbeitungsmaschine ist eingerichtet, aufgrund der ermittelten Beschleunigungen gewisser Schwingungsfrequenzen, insbesondere der vierten Harmonischen, auf den Volumenstrom der gasförmigen Fluidströmung innerhalb des Rohrabschnitts der Bearbeitungsmaschine zu schließen. Diese Korrelation zwischen Volumenstrom und Schwingungsamplitude (beziehungsweise -beschleunigung) wird beispielsweise durch vorgegebene Werte, die in der Steuerung hinterlegt sind und auf Referenzmessungen basieren, ermöglicht.

## Patentansprüche

1. Bearbeitungsmaschine (10) für bevorzugt plattenförmige Werkstücke, welche insbesondere zumindest teilweise aus Holz, Holzwerkstoffen, Kunststoff, Verbundmaterial oder dergleichen bestehen, aufweisend:
einen durchströmten Rohrabschnitt (20) zum Führen einer gasförmigen Fluidströmung (30), der mit einem Bearbeitungsbereich der Bearbeitungsmaschine in Verbindung steht;
einen außerhalb des durchströmten Rohrabschnitts (20) angeordneten Sensor (40a, 40b, 40c) zur Erfassung von Amplituden einer harmonischen Eigenfrequenz im Bereich des Rohrabschnitts (20),
eine Steuereinheit, die eingerichtet ist, eine Schwingungsanalyse eines Signals des Sensors (40a, 40b, 40c) durchzuführen und basierend auf dem Ergebnis der Schwingungsanalyse einen Zusammenhang zwischen dem Signal des Sensors (40a, 40b, 40c) und einem Volumenstrom der gasförmigen Fluidströmung (30) innerhalb des Rohrabschnitts (20) herzustellen.

2. Bearbeitungsmaschine (10) nach Anspruch 1, bei welcher der durchströmte Rohrabschnitt (20) ein flexibles Rohr oder ein Schlauch (41), insbesondere ein Absaugschlauch, ist, wobei das flexible Rohr oder der flexible Schlauch bevorzugt eine geriffelte Innenoberfläche aufweist.

3. Bearbeitungsmaschine (10) nach einem der vorangehenden Ansprüche, bei welcher der Sensor (40a, 40b, 40c) ein Beschleunigungssensor ist.

4. Bearbeitungsmaschine (10) nach einem der vorangehenden Ansprüche, bei welcher der Sensor (40a) an dem Rohrabschnitt (20) angebracht ist.

5. Bearbeitungsmaschine (10) nach einem der Ansprüche 1 bis 3, bei welcher der Sensor (40b) an einem Messelement, insbesondere einem Messschlauch (41), angebracht ist, der an dem Rohrabschnitt (20) eingefügt oder angefügt ist und der ebenfalls die gasförmige Fluidströmung führt.

6. Bearbeitungsmaschine (10) nach einem der Ansprüche 1 bis 3, bei welcher der Sensor (40c) an einem Anschlussstutzen der Bearbeitungsmaschine (11), an den der Rohrabschnitt (20) angeflanscht ist, angebracht ist.

7. Bearbeitungsmaschine (10) nach einem der vorangehenden Ansprüche, bei welcher der Rohrabschnitt (20) an einem Anschlussstutzen einer Absaugeinrichtung und einem weiteren Anschlussstutzen der Bearbeitungsmaschine, bevorzugt freihängend, angebracht ist.

8. Bearbeitungsmaschine (10) nach einem der vorangehenden Ansprüche, wobei die Bearbeitungsmaschine im Bearbeitungsbereich ein spanendes Bearbeitungswerkzeug bzw. -aggregat aufweist.

9. Verfahren zum Überwachen einer gasförmigen Fluidströmung (30) einer Bearbeitungsmaschine (10) für bevorzugt plattenförmige Werkstücke, welche insbesondere zumindest teilweise aus Holz, Holzwerkstoffen, Kunststoff oder dergleichen bestehen, das nachfolgende Schritte aufweist:
Erfassen von Amplituden einer harmonischen Eigenfrequenz im Bereich eines durchströmten Rohrabschnitts (20) der Bearbeitungsmaschine (10), in dem eine gasförmige Fluidströmung (30) geführt wird, durch einen außerhalb des durchströmten Rohrabschnitts (20) angeordneten Sensor (40a, 40b, 40c);
Durchführen einer Schwingungsanalyse eines Signals des Sensors (40a, 40b, 40c); und
Herstellen eines Zusammenhangs zwischen dem Signal des Sensors (40a, 40b, 40c) und einem Volumenstrom der gasförmigen Fluidströmung (30) innerhalb des Rohrabschnitts (20) basierend auf dem Ergebnis der Schwingungsanalyse.

10. Verfahren zum Überwachen nach Anspruch 9, **dadurch gekennzeichnet, dass** ein Signal, insbesondere Nothalt-Signal und/oder ein Warnsignal, ausgegeben wird, wenn der ermittelte Volumenstrom der gasförmigen Fluidströmung (30) unterhalb eines vorgegebenen Mindestwertes oder oberhalb eines Höchstwerts liegt.

11. Verfahren zum Überwachen nach einem der Ansprüche 9 - 10, bei dem durch die Schwingungsanalyse zumindest die Schwingungsfrequenzen und die Schwingungsamplituden der erfassten Schwingung ermittelt werden.

12. Verfahren zum Überwachen nach einem der Ansprüche 9 - 11, bei dem der Zusammenhang zwischen dem Signal des Sensors (40a, 40b, 40c) und dem Volumenstrom anhand vorgegebener Werte, die in der Steuerung hinterlegt sind und auf Referenzmessungen basieren, ermöglicht wird.

13. Verfahren zum Überwachen nach Anspruch 12, bei dem durch die vorher durchgeführten Referenzmessungen ein numerischer Zusammenhang zwischen definierten Volumenströmen der gasförmigen Fluidströmung (30) innerhalb des Rohrabschnitts (20) und den resultierenden Schwingungsamplituden bestimmter Frequenzen der Schwingung bestimmt wird.

14. Verfahren zum Überwachen nach einem der Ansprüche 9 - 13, bei dem Amplituden der vierten harmonischen Eigenfrequenz, erfasst werden, insbesondere Amplituden einer harmonischen Eigenfrequenz des Rohrabschnitts (20).

## Claims

1. Processing machine (10) for preferably plate-like workpieces, which are made in particular at least partly of wood, wood materials, plastic, composite material or the like, having:
a flowed-through pipe section (20) for conducting a gaseous fluid flow (30), which is in connection with a processing area of the processing machine;
a sensor (40a, 40b, 40c) arranged outside the flowed-through pipe section (20) for detecting amplitudes of a harmonic natural frequency in the area of the pipe section (20),
a control unit which is configured to perform a vibration analysis of a signal of the sensor (40a, 40b, 40c) and based on the result of the vibration analysis to make a connection between the signal of the sensor (40a, 40b, 40c) and a volume flow of the gaseous fluid flow (30) inside the pipe section (20).

2. Processing machine (10) according to claim 1, in the case of which the flowed-through pipe section (20) is a flexible pipe or a hose (41), in particular a suction hose, wherein the flexible pipe or the flexible hose preferably has a corrugated inner surface.

3. Processing machine (10) according to any of the preceding claims, in the case of which the sensor (40a, 40b, 40c) is an acceleration sensor.

4. Processing machine (10) according to any of the preceding claims, in the case of which the sensor (40a) is attached on the pipe section (20).

5. Processing machine (10) according to any of claims 1 to 3, in the case of which the sensor (40b) is attached on a measuring element, in particular a measuring hose (41), which is inserted or attached on the pipe section (20) and which also conducts the gaseous fluid flow.

6. Processing machine (10) according to any of claims 1 to 3, in the case of which the sensor (40c) is attached to a connection point of the processing machine (11), onto which the pipe section (20) is flange-mounted.

7. Processing machine (10) according to any of the preceding claims, in the case of which the pipe section (20) is attached to a connection point of a suction device and an additional connection point of the processing machine, preferably in a freely suspended manner.

8. Processing machine (10) according to any of the preceding claims, wherein the processing machine has in the processing area a machining processing tool or unit.

9. Method for monitoring a gaseous fluid flow (30) of a processing machine (10) preferably for plate-like workpieces, which are made in particular at least partly of wood, wood material, plastic or the like, which has the following steps:
detecting amplitudes of a harmonic natural frequency in the area of a flowed-through pipe section (20) of the processing machine (10), in which a gaseous fluid flow (30) is guided, by a sensor (40a, 40b, 40c) arranged outside the flowed-through pipe section (20),
performing a vibration analysis of a signal of the sensor (40a, 40b, 40c); and
making a connection between the signal of the sensor (40a, 40b, 40c) and a volume flow of the gaseous fluid flow (30) inside the pipe section (20) based on the result of the vibration analysis.

10. Method for monitoring according to claim 9, **characterised in that** a signal, in particular an emergency stop signal and/or a warning signal, is outputted when the detected volume flow of the gaseous fluid flow (30) is below a predetermined minimum value or is above a maximum value.

11. Method for monitoring according to any of claims 9 - 10, in the case of which by means of the vibration analysis at least the vibration frequencies and the vibration amplitudes of the detected vibration are determined.

12. Method for monitoring according to any of claims 9 - 11, in the case of which the connection between the signal of the sensor (40a, 40b, 40c) and the volume flow is made possible with reference to predetermined values which are saved in the controller and are based on reference measurements.

13. Method for monitoring according to claim 12, in the case of which by means of the previously made reference measurements a numerical connection is determined between defined volume flows of the gaseous fluid flow (30) inside the pipe section (20) and the resulting vibration amplitudes of specific frequencies of the vibration.

14. Method for monitoring according to any of claims 9 - 13, in the case of which amplitudes of the fourth harmonic natural frequency are detected, in particular amplitudes of a harmonic natural frequency of the pipe section (20).

## Revendications

1. Machine d'usinage (10) pour des pièces à usiner de préférence en forme de plaque, lesquelles sont en particulier composées au moins partiellement de bois, de matériaux dérivés du bois, de plastique, de matériau composite ou analogues, présentant :
une section tubulaire traversée (20) pour guider un écoulement de fluide sous forme gazeuse (30), qui est en communication avec une zone d'usinage de la machine d'usinage ;
un capteur (40a, 40b, 40c) agencé à l'extérieur de la section tubulaire traversée (20) pour la détection d'amplitudes d'une fréquence propre harmonique dans la zone de la section tubulaire (20),
une unité de commande conçue pour réaliser une analyse de vibration d'un signal du capteur (40a, 40b, 40c) et, sur la base du résultat de l'analyse de vibration, établir un lien entre le signal du capteur (40a, 40b, 40c) et un débit volumétrique de l'écoulement de fluide sous forme gazeuse (30) dans la section tubulaire (20).

2. Machine d'usinage (10) selon la revendication 1, dans laquelle la section tubulaire traversée (20) est un tube ou un tuyau flexible (41), en particulier un tuyau d'aspiration, le tube flexible ou le tuyau flexible présentant de préférence une surface intérieure cannelée.

3. Machine d'usinage (10) selon l'une quelconque des revendications précédentes, dans laquelle le capteur (40a, 40b, 40c) est un capteur d'accélération.

4. Machine d'usinage (10) selon l'une quelconque des revendications précédentes, dans laquelle le capteur (40a) est monté au niveau de la section tubulaire (20).

5. Machine d'usinage (10) selon l'une quelconque des revendications 1 à 3, dans laquelle le capteur (40b) est monté au niveau d'un élément de mesure, en particulier un tuyau de mesure (41), qui est inséré ou ajouté au niveau de la section tubulaire (20) et qui guide également l'écoulement de fluide sous forme gazeuse.

6. Machine d'usinage (10) selon l'une quelconque des revendications 1 à 3, dans laquelle le capteur (40c) est monté au niveau d'un raccord de la machine d'usinage (11), au niveau duquel la section tubulaire (20) est fixée par bride.

7. Machine d'usinage (10) selon l'une quelconque des revendications précédentes, dans laquelle la section tubulaire (20) est montée au niveau d'un raccord d'un dispositif d'aspiration et d'un autre raccord de la machine d'usinage, de préférence de manière suspendue librement.

8. Machine d'usinage (10) selon l'une quelconque des revendications précédentes, dans laquelle, dans la zone d'usinage, la machine d'usinage présente un outil ou groupe d'usinage par enlèvement de copeaux.

9. Procédé de surveillance d'un écoulement de fluide sous forme gazeuse (30) d'une machine d'usinage (10) pour des pièces à usiner de préférence en forme de plaque, lesquelles sont en particulier composées au moins partiellement de bois, de matériaux dérivés du bois, de plastique ou analogues, lequel procédé présente les étapes suivantes :
la détection d'amplitudes d'une fréquence propre harmonique dans la zone d'une section tubulaire traversée (20) de la machine d'usinage (10) dans laquelle un écoulement de fluide sous forme gazeuse (30) est guidé, par un capteur (40a, 40b, 40c) agencé à l'extérieur de la section tubulaire traversée (20) ;
la réalisation d'une analyse de vibration d'un signal du capteur (40a, 40b, 40c) ; et, sur la base du résultat de l'analyse de vibration, l'établissement d'un lien entre le signal du capteur (40a, 40b, 40c) et un débit volumétrique de l'écoulement de fluide sous forme gazeuse (30) dans la section tubulaire (20).

10. Procédé de surveillance selon la revendication 9, **caractérisé en ce qu'**un signal, en particulier un signal d'arrêt d'urgence et/ou un signal d'avertissement, est émis lorsque le débit volumétrique déterminé de l'écoulement de fluide sous forme gazeuse (30) est inférieur à une valeur minimale prédéfinie ou supérieur à une valeur maximale.

11. Procédé de surveillance selon l'une quelconque des revendications 9-10, dans lequel, par l'analyse de vibration, sont déterminées au moins les fréquences de vibration et les amplitudes de vibration de la vibration détectée.

12. Procédé de surveillance selon l'une quelconque des revendications 9-11, dans lequel le lien entre le signal du capteur (40a, 40b, 40c) et le débit volumétrique est permis au moyen de valeurs prédéfinies qui sont consignées dans la commande et se basent sur des mesures de référence.

13. Procédé de surveillance selon la revendication 12, dans lequel, par les mesures de référence réalisées auparavant, est déterminé un lien numérique entre des débits volumétriques définis de l'écoulement de fluide sous forme gazeuse (30) dans la section tubulaire (20) et les amplitudes de vibration résultantes des fréquences déterminées de la vibration.

14. Procédé de surveillance selon l'une quelconque des revendications 9-13, dans lequel sont détectées des amplitudes de la quatrième fréquence propre harmonique, en particulier des amplitudes d'une fréquence propre harmonique de la section tubulaire (20).
